# EUROPÄISCHE PATENTANMELDUNG

(11) **EP 4 296 239 A2**
(43) Veröffentlichungstag der Anmeldung: **27.12.2023**
(21) Anmeldenummer: 23174800.5
(22) Anmeldetag: 14.08.2018
(51) Int. Cl.: C02F 1/00

(54) **ABSETZBECKEN UND VERFAHREN ZUM FÜHREN VON TEILSTRÖMEN IM EINSTRÖMBEREICH VON ABSETZBECKEN**

(62) Teilanmeldung aus: 18000674.4
(71) Anmelder: hydrograv GmbH, 01219 Dresden (DE)
(72) Erfinder: ARMBRUSTER, Martin, 01069 Dresden (DE)
(74) Vertreter: Müller Hoffmann & Partner

(57) **Zusammenfassung**

In Absetzbecken (1) sind Einlaufbauwerke (2) angeordnet, durch deren in der Höhe variabel einstellbare Einlauföffnung (3) den Becken die zu trennende Suspension zufließt. Der aus dem Einlaufbauwerk ausströmende Volumenstrom lässt sich abhängig von der aktuellen Belastung zusätzlich zur Höhenvariabilität der Einlauföffnung durch Ausbildung einer horizontal durchströmten Einlauföffnung (3a) oder einer vertikal durchströmten Einlauföffnung (3b) leiten sowie sich optional in in horizontale und vertikale Teilströmungen Q_{I} und Q_{II} aufteilen. Infolge der horizontalen Einströmung steigt bei hoher Belastung die Kapazität des Absetzbeckens, infolge der vertikalen Einströmung sinken bei niedriger Belastung die Menge durch den Absetzraum geleiteten Volumenstroms als auch die turbulente Energie im Absetzraum, sodass der Rückhalt feiner Suspensa im Absetzbecken erhöht und somit die Ablaufqualität verbessert wird.

## Beschreibung

Die Erfindung betrifft ein Absetzbecken, das zumindest zeitweise zur Trennung einer zumindest zweiphasigen Suspension dient, insbesondere zur Trennung von Klärschlamm als Gemisch aus dem Feststoff der reinigenden Biomasse und gereinigtem Klarwasser als Fluid, wobei in das Absetzbecken ein Gesamtvolumenstrom Q_{IN} durch zumindest eine Einlauföffnung entsprechend derer Gestalt und Anordnung einströmt, wobei sich der Gesamtvolumenstrom Q_{IN} zusammensetzt aus der Summe zumindest zweier Teilströme Q_{C} und Q_{R} und wobei aus dem Absetzbecken mit dem Teilstrom Q_{C} die von der schweren Phase befreite leichte Phase abfließt und mit dem Teilstrom Q_{R} die eingedickte, durch die abgetrennte schwere Phase aufkonzentrierte Suspension abgezogen wird und wobei die Zuströmung in das Absetzbecken hinein durch zumindest diese eine Einlauföffnung geführt wird, die sich durch Veränderung der relativen Lage ihrer Berandung zueinander und deren absoluter Lage im Absetzbecken auf ein energetisches Optimum einstellen lässt. Die Erfindung betrifft desweiteren ein Verfahren zum Führen von Teilströmen im Einströmbereich solcher Absetzbecken durch Kontrolle der Gestalt, Größe und/oder Anordnung der Einlauföffnung.

Solche Absetzbecken werden weltweit in biologischen Reinigungsstufen von Kläranlagen eingesetzt, so zum Beispiel als Vor-, Zwischen- und Nachklärbecken. Dabei wird aus einem Teilstrom Q_{C} einer mit dem Gesamtstrom Q_{IN} zufließenden Suspension der Feststoff abgetrennt und aufkonzentriert im Teilstrom Q_{R} wieder aus dem Absetzbecken abgeführt.

Insbesondere beim Nachklärbecken spielt die Effizienz dieser Abtrennung des Feststoffs aus dem Teilstrom Q_{C} eine entscheidende Rolle für den Gesamterfolg der Abwasserreinigung. Denn wenn aus dem Nachklärbecken, dem mit dem Einlaufstrom Q_{IN} typisch eine Suspension mit Biomasse in einer Konzentration von etwa 2.500 mg/l bis 4.000 mg/l zufließt, mit dem gereinigten Abwasser im Klarwasserablaufstrom Q_{C} auch nur wenige Milligramm pro Liter nicht abgetrennte Biomasse abfließen, so trübt dies den Gesamterfolg der Kläranlage insbesondere in Bezug auf den Rückhalt von Phosphor- und Kohlenstoffverbindungen. In der Spannbreite von mittleren Ablaufkonzentrationen im Ablaufstrom Q_{C} zwischen ca. 5 mg/l und 10 mg/l abfiltrierbaren Stoffen bei eher gut gestalteten Einlaufbauwerken und etwa 15 mg/l bis 20 mg/l bei nur durchschnittlich bis mäßig gut gestalteten Becken bedeutet eine Reduktion der abfiltrierbaren Stoffe in Q_{C} selbst um wenige Milligramm pro Liter eine erhebliche Verbesserung.

Zunehmend werden Nachklärbecken heute mit Einlaufbauwerken entsprechend EP 1 607 127 B1 ausgerüstet, bei denen die Zuströmung aus dem Einlaufbauwerk heraus im Wesentlichen horizontal durch eine Einlauföffnung geführt wird, die sich durch Veränderung der relativen und der absoluten Lage ihrer Berandungen auf ein energetisches Optimum einstellen lässt.

Sowohl Q_{C} als auch Q_{R} sind variable Größen. So steigt z. B. der Klarwasserabfluss Q_{C} der Kläranlage von Nacht zu Tag und insbesondere von Trockenwetter zu Regenwetter. Der Rücklaufvolumenstrom Q_{R} wird häufig auf den Abfluss der Kläranlage Q_{C} geregelt und schwankt somit entsprechend. Der Zielwert für das Verhältnis Q_{R}/Q_{C} in einer solchen Regelung liegt typisch bei etwa 0,5 bis 0,75. Allerdings ist Q_{R} häufig maschinentechnisch sowohl im Minimum als auch im Maximum beschränkt. Das heißt, dass der Rücklaufvolumenstrom Q_{R} in Niedriglastzeiten viel höher sein kann als der Klarwasserabfluss Q_{C} und somit Q_{R}/Q_{C} >> 1,0 gilt. Die negative Folge daraus ist, dass vom Gesamtvolumenstrom Q_{IN} je nach Abströmrichtung von der Einlauföffnung ein viel größerer Teilvolumenstrom Qᵢₙₜ >> Q_{C} durch das Becken geleitet wird, als der verfahrenstechnisch notwendiger Weise durch das Becken zu führende Teil Q_{C}.

Der Volumenstrom Q_{IN} = Q_{C} + Q_{R} strömt aus dem Einlaufbauwerk heraus durch die Einlauföffnung in das Absetzbecken ein. Dabei kann die Gestaltung der Einlauföffnung entsprechend der Richtung, in der Q_{IN} in das Absetzbecken hineinströmt, in die zwei wesentlichen Varianten einer überwiegend vertikal oder einer überwiegend horizontal geführten Ausströmrichtung unterschieden werden. Jede durchströmte Fläche ist dabei durch ihre nicht durchströmbaren Berandungen definiert, die sie begrenzen. Eine horizontal durchströmbare Fläche hat mithin zumindest eine höher und eine tiefer angeordnete Berandung, eine vertikal durchströmbare Fläche zumindest zwei Berandungen, die sich in gleicher oder zumindest ähnlicher Höhenlage befinden.

Eine im Wesentlichen vertikal geführte Einströmrichtung ist insbesondere im anglo-amerikanischen Raum üblich und zum Beispiel in US 4 22 28 79 A beschrieben. Eine im Wesentlichen horizontal geführte Ausströmrichtung wird häufig in Europa ausgeführt und ist beispielsweise in EP 1 607 127 B1 beschrieben. Den beiden Varianten gemein ist, dass Teile der Vorrichtungen, so z. B. "Stilling well" und "deflector baffle" in der US-Veröffentlichung oder beispielweise "Eintragsrohr", "Rohrring" und "Ringplatte" in der europäischen Schrift jeweils zusammen einen Raum bilden, der durchströmt wird, bevor die Suspension durch die Einlauföffnung in den Raum eintritt, in dem der Absetzprozess stattfindet. Dieser Raum bzw. die Vorrichtung, die sich daraus ergibt, bildet das sogenannte Einlaufbauwerk des Absetzbeckens.

Der Vollständigkeit halber sei erwähnt, dass es mit Schild-oder Bandräumung und mit Saugräumung zumindest zwei wesentliche grundlegende und davon wieder diverse Detailvarianten des Abzugs des Rücklaufschlammstroms Q_{R} gibt, was aber, genau wie die Form der Absetzbecken selbst, ob rund oder eckig oder in anderer geometrischer Gestaltung und wie auch die Art des Abzugs des geklärten Abwassers Q_{C}, keinen Einfluss auf erfindungsgemäßen Aufgaben hat, deren Aufgabe in der Zuleitung von Q_{IN} = Q_{C} + Q_{R} in das Becken hinein liegt.

Dem Einlaufbauwerk kommen mehrere Aufgaben zu. Die zwei wesentlichsten sind die gezielte Vernichtung ("Dissipation") der für den Transport der Suspension zum Einlaufbauwerk notwendigen kinetischen Energie des zufließenden Volumenstroms einerseits und andererseits die Sicherstellung einer möglichst gleichförmigen und gleich verteilten Zuströmung der Suspension auf die Einlauföffnung - also zu der Schnittstelle zwischen Einlaufbauwerk und Absetzraum. Als Absetzraum ist der Raum des Absetzbeckens zu definieren, in dem die Absetzprozesse stattfinden. Dies ist der Raum, der sich in horizontaler Richtung neben bzw. um das Einlaufbauwerk herum befindet. Der Innenraum des Einlaufbauwerks, der Raum unterhalb der Strukturen des Einlaufbauwerks und der Raum im sogenannten Schlammtrichter gehören entsprechend dieser Definition nicht zum Absetzraum des Absetzbeckens, der Raum unterhalb des Einlaufbauwerkes und der Raum des Schlammtrichters gehören weder zum Einlaufbauwerk noch zum Absetzraum.

Der Zufluss vom Belebungsbecken zum Nachklärbecken hin, also in das Einlaufbauwerk hinein, erfolgt zur Vermeidung von Absetzvorgängen typischer Weise mit hoher Geschwindigkeit und somit hoher kinetischer Energie, typisch bei maximalen Fließgeschwindigkeiten von ca. 70 cm/s bis 1,5 m/s. Das Maß der optimalen Eintrittsgeschwindigkeit an der Einlauföffnung und somit in den Absetzraum des Absetzbeckens hinein ergibt sich hingegen gerade nicht aus Aspekten hoher Energie zur Vermeidung von Absetzen, sondern im Gegenteil gerade aus Aspekten der Vermeidung von Störungen der Absetzvorgänge durch Optimierung auf minimalen Energieeintrag. Ein deterministisches Maß für den Energiefluss an der Einlauföffnung ist die densimetrische Froudezahl F_{D}. Gilt F_{D} = 1, ist die Summe aus dem Druckanteil des potenziellen Energieflusses und dem kinetischen Energiefluss in das Absetzbecken hinein minimal. Aus dieser Betrachtung heraus ergibt sich mit gegebener Längenausdehnung L_{IN} der Einlauföffnung vom aktuellen Zufluss Q_{IN} und von der densimetrisch wirksamen Auftriebsbeschleunigung g' abhängig eine energetisch optimale Einlaufausdehnung von hₒₚₜ = (Q²_{IN}/B²_{IN}/g')^{1/3}. Da physikalisch unnötige Energieeinträge im Absetzbecken zu kontraproduktiver Verwirbelung und Einmischungsvorgängen führen, ist eine Einströmung mit F_{D} = 1 bzw. mit hₒₚₜ wegen des zum Transport minimal notwendigen Energieeintrags offensichtlich optimal. Für die Strömungsgeschwindigkeit durch die Einlauföffnung ergibt sich bei Nachklärbecken je nach Randbedingung unter der Bedingung von F_{D} = 1 belastungsabhängig optimal mit ca. 4 cm/s bis 8 cm/s. Somit hat das Einlaufbauwerk offensichtlich die erste wichtige Funktion, den kinetischen Energiefluss Eₖ = 1/2 Q U², der am Eintritt in das Einlaufbauwerk noch das bis über eintausend-fache bzw. über 99,9 % des optimalen kinetischen Energieflusses an seinem Austritt betragen kann (150² / 4² >> 1.000), innerhalb seines Volumens zu vernichten. Neben der Eigenschaft "Größe des Einlaufbauwerks", das die Größe des Zulaufrohrs bezüglich Durchmesser beziehungsweise bezüglich des umschlossenen Raums erheblich übersteigen muss, um die gewünschte Abbrems- und Energievernichtungswirkung erzielen zu können, stehen die geometrische Ausgestaltung des Einlaufbauwerks sowie der Einlauföffnung selbst als auch strömungsbegünstigende Ein- und Anbauten wie zum Beispiel Lochbleche, Umlenkeinrichtungen, Blenden und Lamellen im Fokus der Gestaltung. Daraus folgend ist ein Einlaufbauwerk ein eigenes, großvolumiges Gebilde, das nicht mit einem Rohr vergleichbar ist.

Die Einströmung in ein Nachklärbecken ist grundsätzlich mit Reynoldszahl Re >> 500 hoch turbulent. Die damit eingetragene turbulente kinetische Energie hat für Absetzbecken die negative Eigenschaft, Strömungen zu destabilisieren, dichtegeschichtete Strömungen insbesondere an ihrer Phasengrenze, die bei Nachklärbecken Schlammspiegel genannt wird. Die Folge der turbulenten Destabilisierung des Schlammspiegels ist, dass Feinsuspensa ins Klarwasser gewirbelt werden und in der Folge mit dem Volumenstrom Q_{C} ausgetragen werden. Die in den Absetzraum eingetragene, destabilisierende turbulente kinetische Energie steigt mit steigendem Volumenstrom. Daher führt jeder unnötig durch das Absetzbecken geleitete Teilvolumenstrom zu vermeidbarer Freisetzung von Feinsuspensa an der Phasengrenze.

Die EP 1 607 127 B1 stellt sich zur Aufgabe, sowohl den Energieeintrag von Auftriebsenergie E_{b} als auch den Druckanteil Eₚ und schließlich den kinetischen Energiefluss Eₖ zu minimieren. Dazu wird die Form des Einlaufbauwerks und der Einlauföffnung durch veränderbare Strömungsberandung kontinuierlich so angepasst, dass sich möglichst zu jedem Zeitpunkt und bei jeder aktuellen Belastung des Absetzbeckens E_{b} = 0 und gleichzeitig F_{D} = 1 einstellt und die Zuströmung Q_{IN} weitgehend horizontal aus dem Einlaufbauwerk heraus direkt in den Absetzraum des Beckens hinein erfolgt. Damit gewährleistet die beschriebene Technik, dass der auch bei energetischer Optimierung unvermeidbare Mindestenergiefluss Eₖ nicht schräg oder gar vertikal in die eingedickte Suspension eingeleitet wird, wo er insbesondere in Phasen hoher Belastung, also hohem Q_{C}, Teile des bereits abgetrennten Feststoffes wieder aufwirbeln und somit resuspendieren würde. Eine solche Resuspension hätte den Nachteil, die Beckenbelastung gerade bei hoher externer Belastung Q_{C} intern nochmals erheblich zu erhöhen.

Trotz langer Forschungsarbeit auf diesem Gebiet und diversen grundlegenden Verbesserungen funktionieren diese Becken gerade bei kleinem Q_{IN} weiter nicht optimal. Ihre Abtrennleistung ist in manchen Situationen immer noch unbefriedigend in Bezug auf den Raum, der ihnen hierzu zur Verfügung steht. Insbesondere die Ablaufwerte der zu klärenden leichteren Phase stellen sich bei kleinem Q_{C} in einer weiter reduzierbaren Größe ein. So hat der Stand der Technik mit vertikaler Einleitung von Q_{IN} in das Absetzbecken hinein den offensichtlichen Nachteil, dass, wie beschrieben, die unvermeidbare Einlaufenergie bereits abgesetzte Feststoffe wieder aufwirbelt und somit die Absetzbeckenbelastung durch Resuspension in erheblichem Maße erhöht. Das Absetzbecken versagt bei vertikalem Austritt der zufließenden Suspension aus dem Einlaufbauwerk bei ansteigendem Q_{C} deutlich früher, das heißt bei deutlich geringeren absoluten Q_{C}-Belastungen als bei horizontalem Austritt. Der Nachteil, den Zuflussstrom vertikal einzuleiten, entsteht im Stand der Technik also insbesondere bei Hochlast mit großem Q_{C}. Dementgegen gibt es deutliche Nachteile für einen horizontalen Austritt insbesondere bei Niedriglast: die Menge Q_{C} des von Schlamm zu trennenden gereinigten Abwassers ist klein, der Schlammspiegel liegt demzufolge sehr tief im Becken. Der Mindestvolumenstrom Q_{R} bleibt entsprechend der maschinentechnischen Restriktionen aber hoch. Der damit groß bleibende Volumenstrom Q_{IN} = Q_{C} + Q_{R} wird nun bei Niedriglast (kleines Q_{c}) mit hoher turbulenter Energie horizontal direkt in den schlammarmen oder bei niedriger Last sogar schlammfreien Absetzraum geleitet. Die Folge ist ein durch Turbulenz verursachte Destabilisierung und somit zu hoher Eintrag an Feinsuspensa ins Klarwasser. Dieser Nachteil ergibt sich selbst dann, wenn das Becken mit einer Einlaufgestaltung gemäß EP 1 607 127 B1 ausgerüstet ist, die zwar mit variabler und somit jederzeit energetisch optimierbarer Fläche A_{IN} einströmen lässt, aber bei grundsätzlich weitestgehend horizontaler Ausströmrichtung eben insbesondere bei niedriger Last in nachteilhafter Ausrichtung.

Angesichts der beschriebenen Nachteile im Stand der Technik stellt sich das technische Problem, ein optimiertes Absetzbecken zu gestalten, das sich gleichzeitig erstens durch höchstmögliche Abtrennleistung bei hohen Belastungen, zweitens besseren Ablaufwerten bei allen Lasten, drittens durch infolge kontinuierlicher energetischer Optimierung geringerer interner Belastungserhöhung und viertens durch einen störungsarmen Betrieb insbesondere bezüglich unnötiger Strömungskomponenten im Hauptstrom des Beckens auszeichnet. Die Erfindung, die das technische Problem löst, beruht auf der Erkenntnis, dass bei niedrigen Lasten der aus dem Einlaufbauwerk ausströmende Volumenstrom nicht wie in EP 1 607 127 B1 beschrieben tief und weitestgehend horizontal in das Becken eingeleitet werden darf, sondern dass zumindest ein ausreichend großer Teilstrom Qᵢ weitestgehend vertikal oder aber sogar entgegen der konventionellen horizontalen Einströmrichtung aus dem Einlaufbauwerk herausgeleitet werden muss. Liegt also die Haupteinströmrichtung für weitgehend horizontales Ausströmen in Ziffernblatt-Koordinaten in etwa in Richtung zwei bis vier Uhr, sollte bei niedrigen Lasten zumindest ein in der Hauptströmung negativ wirkender Teil der Zuströmung das Einlaufbauwerk in etwa Richtung fünf Uhr bis neun Uhr, im Extremfall bis etwa in Richtung elf Uhr verlassen. Dies hat den Vorteil, dass vom Zulaufvolumenstrom Q_{IN} = Q_{C} + Q_{R} zumindest ein Teil des Turbulenz eintragenden Volumenstroms Q_{R} nicht mit dem Hauptstrom direkt in und durch das Becken geleitet wird. Somit leistet dieser Teilstrom auch keinen Beitrag zu destabilisierender turbulenter Energie am Schlammspiegel. Vorteilhaft befindet sich die zumindest eine Einlauföffnung dabei insbesondere des Weiteren bei Niedriglast tief im Becken. Bei hoher Last hingegen sollte der gesamte oder zumindest der größere Teil des Gesamtvolumenstroms Q_{IN} dann weitestgehend horizontal, also in etwa in Richtung zwei bis vier Uhr geleitet werden, um nicht zu tief ins Becken einzutauchen und bereits abgesetzten Schlamm wieder aufzuwirbeln, aber auch nicht zu hoch aufzusteigen und somit ins Klarwasser zu strömen.

Die Vorteile des weitgehend vertikalen Ausströmens aus dem Einlaufbauwerk werden bei einem Becken, bei dem sich die Einlauföffnung in der Nähe der Eintiefung zum Absaugen des Schlammes, dem sogenannten Schlammtrichter, befindet, dann erreicht, wenn der Zulaufvolumenstrom in ausreichender Menge zum Schlammtrichter geleitet wird oder sogar direkt in diesen hinein. Bei einem Becken, bei dem sich die Einlauföffnung entfernt vom Schlammtrichter befindet oder bei dem kein Schlammtrichter vorhanden ist, werden die Vorteile des weitgehend vertikalen Ausströmens dann erreicht, wenn der zulaufende Volumenstrom zunächst direkt auf die Sohle und zwischen dieser und einer die Strömung nach oben begrenzenden Struktur in den Raum unterhalb des Einlaufbauwerkes eingeleitet wird.

Die unterschiedliche Lenkung des Volumenstroms bei unterschiedlichen Belastungen kann entweder dadurch erzielt werden, dass die Berandungen der Einlauföffnung relativ zueinander so positioniert werden können, dass sich die unterschiedlich orientierten Einströmrichtungen durch unterschiedlich orientierte Einlauföffnungen ergeben, oder dadurch, dass Teile des Volumenstroms oder der gesamte Volumenstrom durch mehrere zu öffnende oder zumindest teilweise zu verschließende Einlauföffnungen temporär und je nach Belastung auf überwiegend horizontalem oder auf überwiegend vertikalem Weg aus dem Einlaufbauwerk geleitet werden können. Der Gesamtflächeninhalt A_{IN} der Einströmöffnung ist vorteilhaft variabel zu gestalten, damit für jede Einströmmenge zumindest weitgehend auf Fr_{D} = 1 optimiert werden kann. So lässt sich abhängig von Volumenstrom und/oder Dichte der eingeleiteten Suspenion gleichzeitig zu der lastabhängigen Richtungsänderung jede vermeidbare destabilisierende Impulsänderung im Bereich des Einlaufs verhindern.

Ein lastabhängiges Optimum für die Ausrichtung des zufließenden Stroms ergibt sich aus der durch Veränderung der relativen Anordnung von oberem Rand und unterem Rand der Einlauföffnung variierender Orientierung der Einlauföffnung oder aber in einer variierenden Aufteilung des Gesamtstroms in zumindest zwei Teilströme Q_{IN} = Q_{C} + Q_{R} = Qᵢ + Qᵢᵢ = Qₕ + Qᵥ; die auf zumindest zwei unterschiedlichen Wegen, also durch zumindest zwei unterschiedliche Teilflächen Aᵢ und Aᵢᵢ in das Becken einströmen. Die Teilströme horizontal Qₕ und vertikal Qᵥ werden dabei in der Regel nicht dasselbe Verhältnis aufweisen wie die summengleichen Volumenströme Q_{C} und Q_{R}. Unterstützt wird die variierende Aufteilung durch messtechnische Erfassung der Belastung und Einstellung der Einlauföffnungen des Absetzbeckens in Art und Größe auf die aktuelle Belastung. Vollständig oder teilweise selbsttätige Verstellung, z. B. durch Ausnutzung von Strömungskräften oder Dichteunterschieden, steht der Erfindung nicht entgegen.

Gelöst wird die Aufgabe gemäß Patentanspruch 1 durch ein Verfahren, bei dem der Austritt eines mehrphasigen Fluids mit Zulaufvolumenstrom Q_{IN} aus dem Einlaufbauwerk in zumindest ein Becken durch zumindest ein Einlaufbauwerk und durch zumindest eine variabel gestaltete Einlauföffnung erfolgt, mit anschließender Trennung der unterschiedlich schweren Phasen in zumindest je einen Rücklaufvolumenstrom Q_{R} und einen Ablaufvolumenstrom Q_{C} in dem zumindest einen zumindest temporären Absetzbecken, dadurch **gekennzeichnet**, dass der Zustrom Q_{IN} in oder an dem Einlaufbauwerk energetisch optimiert und durch Veränderung der Lage der Einströmränder der zumindest einen Einlauföffnung zueinander oder durch zumindest temporäre Aufteilung in zumindest zwei Teilströme Qₕ und Qᵥ das Einlaufbauwerk je nach Belastungssituation auf unterschiedlichem Weg bzw. in unterschiedlich orientierter Strömungsrichtung, bei hoher Last überwiegend in Richtung zwei bis vier Uhr und bei niedriger Last überwiegend in Richtung fünf bis elf Uhr verlässt.

Gelöst wird die Aufgabe gemäß Patentanspruch 4 durch ein Absetzbecken, bei dem die Zuführung eines mehrphasigen Fluids mit Zulaufvolumenstrom Q_{IN} in das zumindest eine zumindest temporäre Absetzbecken durch zumindest ein Einlaufbauwerk und durch zumindest eine variabel gestaltete Einlauföffnung erfolgt, mit anschließender Trennung der unterschiedlich schweren Phasen in je einen Rücklaufvolumenstrom Q_{R} und einen Ablaufvolumenstrom Q_{C}, dadurch **gekennzeichnet**, dass der Zustrom Q_{IN} in oder an dem Einlaufbauwerk zum Absetzbecken energetisch optimiert und durch Veränderung der Lage der Einströmberandungen der zumindest einen Einlauföffnung zueinander oder durch zumindest temporäre Aufteilung in zumindest zwei Teilströme Qₕ und Qᵥ dem Becken auf unterschiedlichem Weg bzw. durch unterschiedliche Teilflächen in je nach Belastungssituation unterschiedlicher Strömungsrichtung überwiegend zumindest weitgehend in Richtung zwei bis vier Uhr bei hoher Last und überwiegend zumindest weitgehend in Richtung vier bis elf Uhr bei niedriger Last zuströmt.

Vorteilhafte Ausgestaltungen der Erfindung ergeben sich aus den Unteransprüchen.

Eine vorteilhafte Ausführung eines Beckens ergibt sich, wenn die Einlauföffnung des Einlaufbauwerks des Beckens durch zwei höhenvariable Berandungen definiert ist, die so ausgestaltet sind, dass zumindest eine Berandung über und auch unter die Kote der anderen Berandung geführt werden kann. Für ein rundes Einlaufbauwerk ist dies z. B. gegeben, wenn die Einlauföffnung durch einen vertikal teleskopierbaren Zylinder und durch eine vertikal verschiebliche Ringplatte definiert wird und der Innendurchmesser des Zylinders größer ist als der Außendurchmesser der Ringplatte. Wird die höhenvariable Unterkante des Zylinders oberhalb der aktuellen Kote der Oberkante der Ringplatte angeordnet, bilden die beiden Bauteile die Berandung einer vertikal orientierten Einlauföffnung variabler Größe, die folglich weitestgehend horizontal durchströmt und gleichzeitig energetisch auf die aktuelle Belastung optimierbar wird. Wird die Unterkante des Zylinders unterhalb der Kote der Oberkante der Ringplatte angeordnet, bilden die beiden Bauteile die Berandung einer horizontal orientierten Einlauföffnung variabler Größe, die folglich überwiegend vertikal durchströmt wird und ebenfalls energetisch optimiert ist.

Eine weitere vorteilhafte Ausführung eines Beckens ergibt sich, wenn die Einlauföffnung des Einlaufbauwerks durch zwei höhenvariable Berandungen definiert ist, wobei die untere Strömungsberandung zumindest zweigeteilt ausgeführt ist. In einer unteren Position befinden sich die beiden Teile der unteren Strömungsberandung auf unterschiedlicher Kote, sodass sich zwischen den beiden Teilen eine zweite durchströmbare Fläche öffnet, die den sie durchströmenden Teilvolumenstrom Q_{V} vorwiegend vertikal in etwa in Richtung fünf bis neun Uhr oder aber sogar entgegegen der Hauptströmungsrichtung in etwa bis in Richtung elf Uhr lenkt.

Eine vorteilhafte Ausführung eines runden oder auch eines rechteckigen Beckens ergibt sich, wenn die variabel gestaltete Einlauföffnung peripher am Becken angeordnet ist.

Die für die Flockenfilterwirkung positive Strahleinmischung aus Bereichen höherer Dichte kann man fördern, indem man durch ein Strömungsleitschild über dem Einlauf dafür sorgt, dass sich eine Einmischung in den zulaufenden Suspensionsstrom ausschließlich aus dem unteren Bereich des Absetzbeckens mit Suspension höherer Dichte versorgen kann.

Ausführungsbeispiele der Erfindung werden nachstehend unter Bezugnahme auf die beigefügten Zeichnungen näher beschrieben.

Es zeigen:

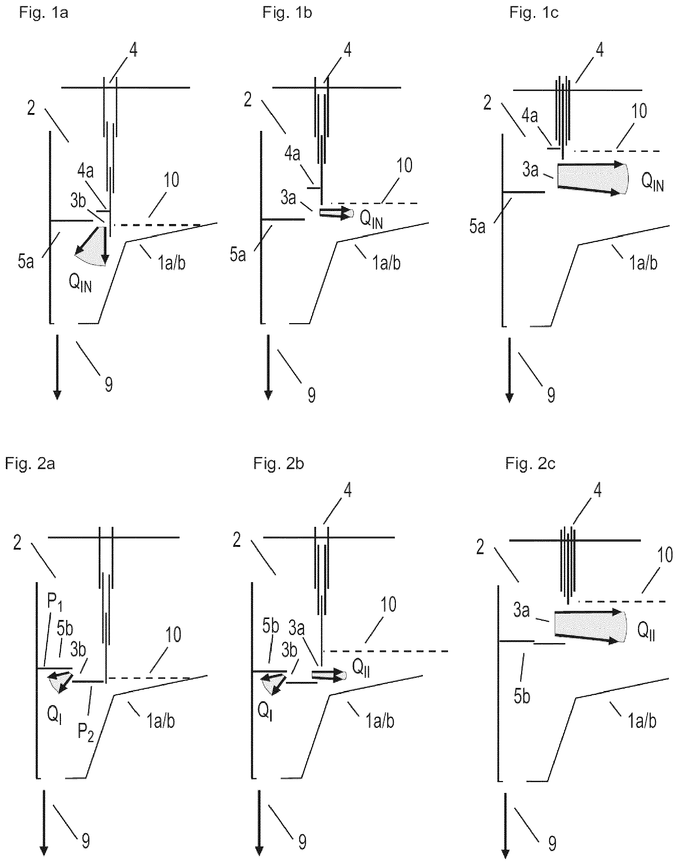

Fig. 1a - 1c Ein rundes oder rechteckiges Absetzbecken, in dem ein Einlaufbauwerk mit zwei höhenvariablen Berandungen angeordnet ist, die so ausgestaltet sind, dass zumindest eine Berandung über und auch unter die Kote der anderen Berandung geführt werden kann und so bei kleiner Last (Fig. 1a) die Einlaufströmung vertikal und bei höherer Belastung (Fig. 1b und 1c)horizontal aus dem Einlaufbauwerk heraus geführt wird;
Fig. 2a - 2c Ein Absetzbecken, in dem ein Einlaufbauwerk mit zwei höhenvariablen Berandungen angeordnet ist, wobei die untere Strömungsberandung zweigeteilt ausgeführt ist. In der untersten Position der Zulaufstrom als Q_{V} vertikal eingeleitet (Fig. 1a), in mittlerer Position wird er in einen vertikalen Zulauf Q_{V} und einen horizontal geführten Zulauf Q_{H} aufgeteilt (Fig. 1a), in oberer Position wird er ausschließlich horizontal mit Q_{H} geführt;

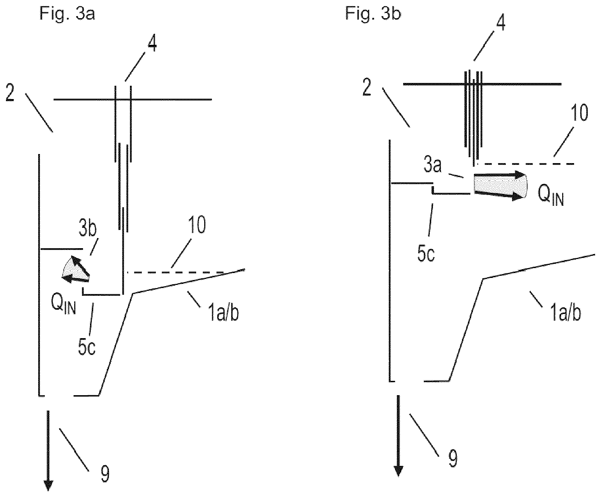

Fig. 3a - 3b Ein Absetzbecken, in dem ein Einlaufbauwerk mit zwei höhenvariablen Berandungen und zweigeteilter unterer Strömungsberandung angeordnet ist. In der untersten Position wird der Zulaufstrom als Q_{V} etwa in Richtung 9 - 11 Uhr nach innen geleitet (Fig. 3a), in oberer Position wird er ausschließlich horizontal mit Q_{H} geführt;

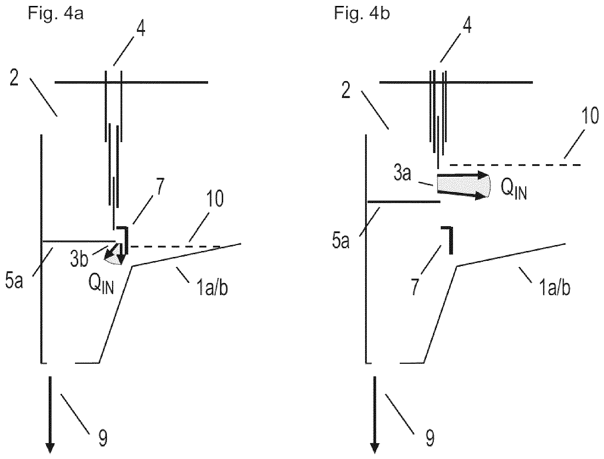

Fig. 4a - 4b Ein Absetzbecken, in dem ein Einlaufbauwerk mit zwei höhenvariablen Berandungen und einem ortsfest angeordneten Strömungsleitschild 7 angeordnet ist. In der untersten Position wird der Zulaufstrom durch die Vertikalumlenkung des Strömungsleitschilds 7 als Q_{V} vertikal eingeleitet (Fig. 4a), in oberer Position wird er ausschließlich horizontal mit Q_{H} geführt (Fig. 4a);

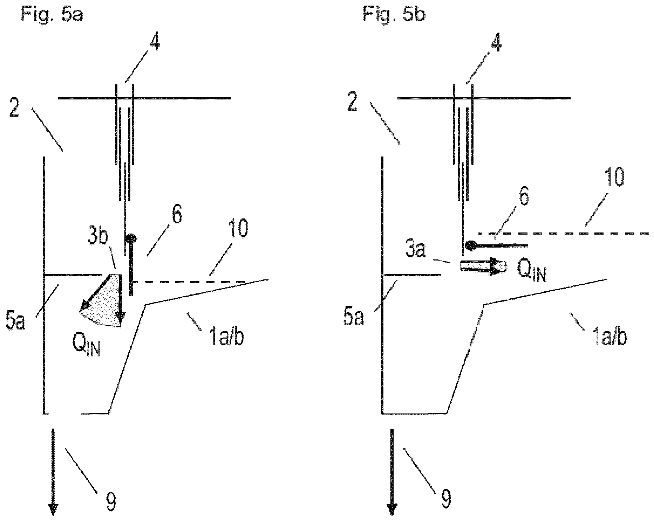

Fig. 5a - 5b Ein Absetzbecken angeordnet ist, in dem ein Einlaufbauwerk mit zwei höhenvariablen Berandungen und einem im Winkel verstellbaren Strömungsleitschild 6 an einer der Berandungen. In der untersten Position wird der Zulaufstrom durch das im Winkel verstellbare Strömungsleitschild als Q_{V} vertikal eingeleitet (Fig. 5a), in oberer Position wird er ausschließlich horizontal mit Q_{H} geführt (Fig. 5a);

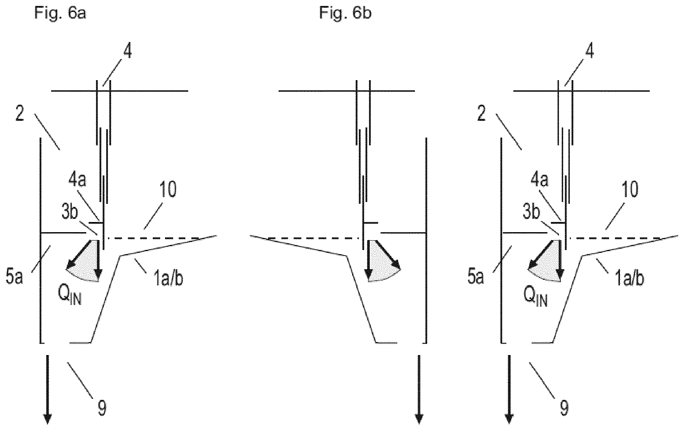

Fig. 6a, 6b Grundsätzlich ist die Erfindung unabhängig davon, ob das Einlaufbauwerk in einem rechteckigen oder runden Becken und ob es inmitten des Beckens oder peripher angeordnet ist. Fig. 6a zeigt Fig. 1 peripher, Fig. 6b zeigt beispielhaft die
   selbe erfindungsgemäße Ausgestaltung in zentraler Anordnung;

Alle Abbildungen zeigen Absetzbecken in stark vereinfachten Vertikalschnitten. Gleiche Elemente sind jeweils mit denselben Bezugszeichen versehen.

Das in den Figuren 1a bis 1c beispielhaft und ausschnittsweise dargestellte Becken 1, das hier entweder rund oder auch rechteckig ist (1a oder 1b), hat ein durch die Berandungen 4 und 5a definiertes Einlaufbauwerk 2 mit einer Einlauföffnung 3, die sich je nach Belastung und damit je nach eingestellter Höhenlage ihrer in der Höhenausdehnung veränderbaren Wand 4 und ihrer ebenfalls in ihrer Höhenlage veränderbaren Vorrichtung 5a entweder als im Wesentlichen horizontal durchströmte Einlauföffnung 3a oder aber als im Wesentlichen schräg, vertikal oder nach innen durchströmte Einlauföffnung 3b ergibt.

In Figur 1a ist eine Situation bei niedriger Last dargestellt, in der die Wand 4 sich bis ganz nach unten ausdehnt und mit ihrer Unterkante unter die Kote der Vorrichtung 5a abgesenkt ist. Vorteilhaft kann die Wand 4 die Kote der Vorrichtung 5a dabei zumindest um denselben Betrag nach unten überfahren, den der horizontale Abstand zwischen der Außenkante der Vorrichtung 5a und der Innenkante der Wand 4 misst. Damit entsteht eine Öffnung 3b, die zumindest mit einem Winkel von 45° gegen die Horizontale nach innen geneigt ist. Der Trennspiegel 10 liegt entsprechend der geringen Belastung tief. Die Unterkante der Wand 4 und die Außenkante der Vorrichtung 5a bilden in dieser Konstellation eine im Wesentlichen schräg, vertikal oder nach innen durchströmte Einlauföffnung 3b.

In Figur 1b ist eine Situation mit mittlerer Last dargestellt. Der Trennspiegel 10 ist leicht angestiegen, die Wand 4 hat sich so verkürzt, dass die Kote deren Unterkante nunmehr oberhalb der Kote der Vorrichtung 5a liegt. Nun bilden die Unterkante der Wand 4 und die Außenkante der Vorrichtung 5a entsprechend der Aufgabe der Erfindung eine im Wesentlichen horizontal durchströmte Einlauföffnung. Diese horizontale Ausrichtung der Strömung an der Einlauföffnung wird durch das Umlenkleitschild 4a im unteren Bereich von Wand 4 unterstützt, das bei Hochlast das vertikale Strömen entlang der Wand 4 unterbindet und in die Horizontale nach innen leitet. Dadurch legt sich die Strömung in der Folge horizontal nach außen gerichtet an die Vorrichtung 5a an.

In Figur 1c ist eine Hochlastsituation dargestellt. Der Trennspiegel 10 ist weit nach oben angestiegen. Die Wand 4 ist nun noch stärker verkürzt, die Vorrichtung 5a wurde nun ebenfalls ein Stück nach oben bewegt. Gemeinsam bilden Wand 4 und Vorrichtung 5a, ebenfalls unterstützt durch Umlenkleitschild 4a, immer noch erfindungsgemäß eine für hohe Last im Wesentlichen horizontal durchströmte Einlauföffnung, nun aber in energetischer Optimierung durch vergrößerte Höhendifferenz der Koten der Strömungsberandungen bei höherem Zufluss Q_{IN} mit vergrößerter Einlaufausdehnung hₒₚₜ.

In den Figuren 2a bis 2c zeigt ein durch die Berandungen 4 und 5b definiertes Einlaufbauwerk 2 mit einer Einlauföffnung 3a und/oder 3b, die sich je nach Belastung und damit je nach eingestellter Höhenlage ihrer in der Höhenausdehnung veränderbaren Wand 4 und ihrer ebenfalls in ihrer Höhenlage veränderbaren Vorrichtung 5b entweder als im Wesentlichen horizontal durchströmte Einlauföffnung 3a (Fig. 2b und Fig. 2c) oder aber als im Wesentlichen schräg, vertikal oder nach innen durchströmte Einlauföffnung 3b (Fig. 2a und Fig. 2b) ergibt. Die mehrteilige untere Umlenkung 5b, die beispielhaft als Platte P mit den Teilen P₁ und P₂ ist, führt über die sich ausbildenden Einlauföffnungen 3b (Fig. 2a) den Volumenstrom Q_{I} vertikal, über 3a und 3b (Fig. 2b)gleichzeitig die Volumenströme Q_{I} vertikal und Q_{II} horizontal und in Fig. 2c über 3a den Volumenstrom Q_{II} horizontal.

In den Figuren 3a und 3b ist ein Einlaufbauwerk 2 mit mehrteiliger unterer Umlenkung mit zusätzlicher Strömungsumlenkung 5c dargestellt. In Fig. 3a leitet 5c den Volumenstrom in Richtung 9 - 11 Uhr nach hinten, während in Fig. 3b der Volumenstrom weitgehend horizontal nach vorn ausströmt.

In den Figuren 4a und 4b ist ein Einlaufbauwerk 2 mit einteiliger unterer Umlenkung 5a und zusätzlichem starr angeordnetem Strömungsschild 7 dargestellt. In Fig. 4a leitet 7 den Volumenstrom in vertikaler Richtung, während in Fig. 4b der Volumenstrom weitgehend horizontal nach vorn ausströmt.

In den Figuren 5a und 5b ist ein Einlaufbauwerk 2 mit einteiliger unterer Umlenkung 5a und zusätzlichem, im Winkel verstellbarem Strömungsleitschild 6 dargestellt. In Fig. 5a leitet 6 den Volumenstrom in vertikaler Richtung, während in Fig. 5b der Volumenstrom weitgehend horizontal nach vorn ausströmt.

Fig. 6a und 6b zeigen, dass dieselben erfindungsgemäßen Merkmale in peripherer Ausführung (Fig. 6a) wie auch in zentraler Ausführung (Fig. 6b) möglich sind.

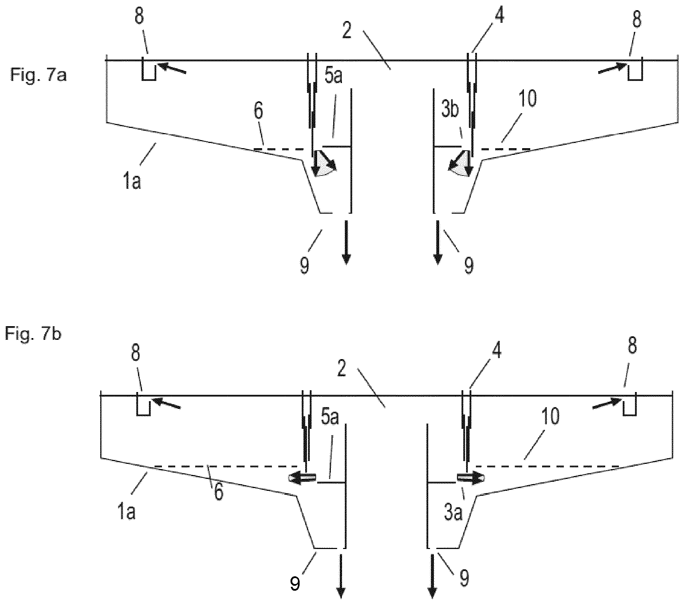

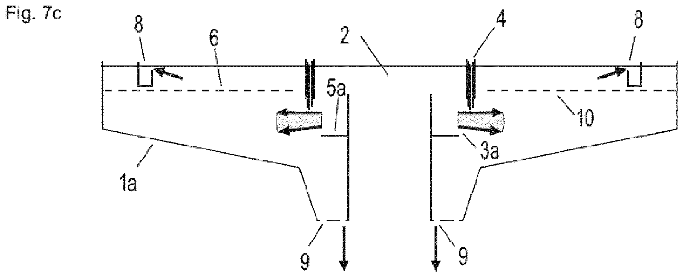

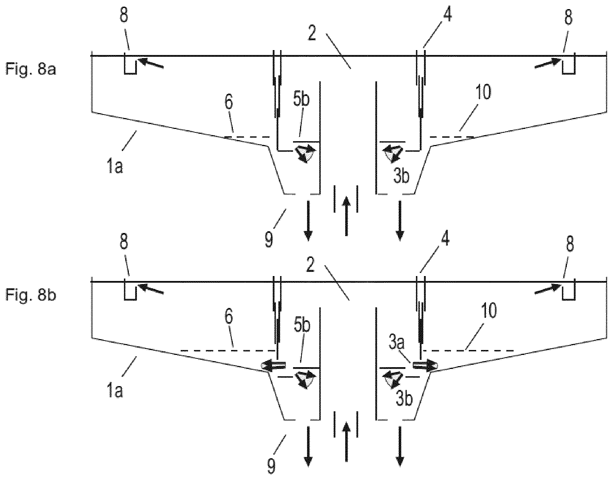

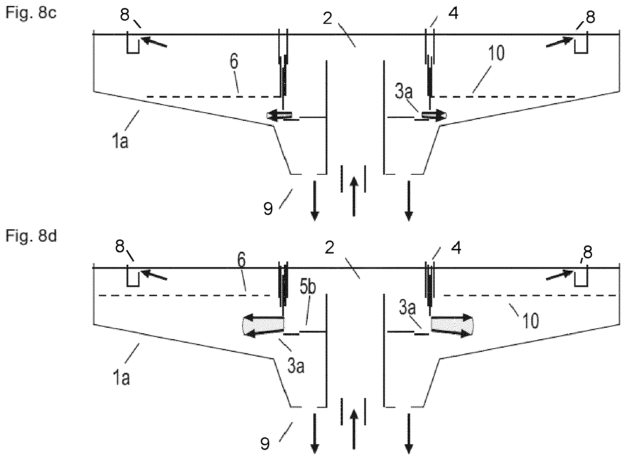

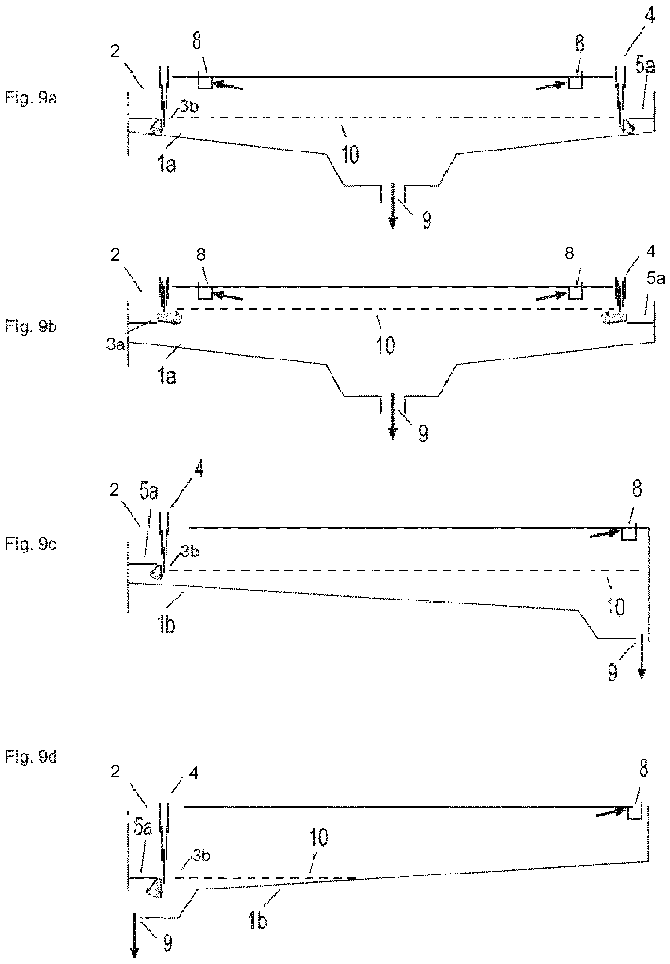

Fig. 7, 8 und 9 verdeutlichen nochmals in schematischen Querschnitten durch verschiedene Absetzbeckengeometrien, dass die erfindungsgemäßen Merkmale nicht von der Beckengeometrie abhängig sind und beispielhaft in zentraler Ausführung für ein rundes Absetzbecken gelten (Fig. 7 und Fig. 8) als auch in peripherer Ausführung für runde (Fig. 9a und 9b) sowie rechteckige Absetzbecken möglich sind (Fig. 9c und 9d).

### Zusammenstellung der Bezugszeichen

- 1a: Rundes Becken
- 1b: Rechteckiges Becken
- 2: Einlaufbauwerk
- 3: Einlauföffnung
- 3a: Im Wesentlichen horizontal durchströmte Einlauföffnung
- 3b: Im Wesentlichen schräg, vertikal oder nach innen durchströmte Einlauföffnung
- 4: In der Höhenlage bzw. in ihrer vertikalen Ausdehnung veränderbare Wand
- 4a: Umlenkleitschild im unteren Bereich von Wand 4
- 5a: ein- oder mehrteilige Vorrichtung als untere und zeitweise als innere Umlenkung
- 5b: mehrteilige Vorrichtung als untere Umlenkung in Form einer Platte P mit den Teilen P₁ und P₂, zeitweise als Strömungsaufteiler in Volumenströme Q_{I} und Q_{II} und dann gleichzeitig Strömungsberandung für Volumenstrom Q_{II}
- 5c: Vorrichtung entsprechend 5b, mit zusätzlicher Strömungsumlenkung nach oben für Volumenstrom Q_{II}
- 6: Im Winkel verstellbares Strömungsleitschild
- 7: Starre angeordnetes Strömungsleitschild
- 8: Klarwasserabzug
- 9: Schlammabzug
- 10: Trennspiegel
- P: Platte mit Teilplatten P₁ und P₂
- Q_{IN}: Einlaufvolumenstrom
- Q_{I}: Teil-Volumenstrom, der die Teil-Fläche mit Flächeninhalt A_{I} durchströmt
- Q_{II}: Teil-Volumenstrom, der die Teil-Fläche mit Flächeninhalt A_{II} durchströmt

### Weitere Varianten sind die Folgenden:

Ziffer 1: Verfahren, bei dem der Austritt eines mehrphasigen Fluids mit Zulaufvolumenstrom Q_{IN} aus dem Einlaufbauwerk in zumindest ein Absetzbecken durch zumindest ein die Einlaufenergie durch Anpassung der Einlauföffnung kontinuierlich optimierendes Einlaufbauwerk erfolgt, mit anschließender Trennung der unterschiedlich schweren Phasen in zumindest je einen Rücklaufvolumenstrom Q_{R} und einen Ablaufvolumenstrom Q_{C} in dem zumindest einen zumindest temporären Absetzbecken, dadurch **gekennzeichnet**, dass zumindest ein Teilstrom Q_{I} und bis zum gesamten Zustrom Q_{IN} in oder an dem Einlaufbauwerk durch Veränderung der Lage der Einströmränder der Einlauföffnung zueinander oder durch zumindest temporäre Aufteilung der Einströmfläche in unterschiedlich ausgerichtete Teilflächen aus dem Einlaufbauwerk bei hoher Last weitgehend in Richtung zwei bis vier Uhr und bei niedriger Last zumindest in einem Teilstrom Q_{I} in Richtung fünf bis elf Uhr herausströmt.

Ziffer 2: Verfahren nach Ziffer 1, dadurch **gekennzeichnet**, dass die Richtung der Abströmung bzw. das Maß der Aufteilung zwischen Qᵢ = Q_{IN} und Qii = 0 sowie Qᵢ = 0 und Qᵢᵢ = Q_{IN} teilweise oder insgesamt und in Stufen oder stufenlos variabel einstellbar oder selbsteinstellend ist.

Ziffer 3: Verfahren nach Ziffer 1 oder 2, dadurch **gekennzeichnet** , dass die momentane Belastung des Absetzbeckens direkt oder indirekt über die Gesamtbelastung erfasst wird, um durch Steuerung oder Regelung das Maß der aktuellen Aufteilung in die Volumenströme Qᵢ und Qᵢᵢ und/oder die Ausrichtung der Zuströmung einstellen zu können.

Ziffer 4: Absetzbecken zur Durchführung des Verfahrens nach einer oder mehrerer der Ziffern 1 bis 3, bei dem der Austritt eines mehrphasigen Fluids mit Zulaufvolumenstrom Q_{IN} aus dem Einlaufbauwerk in zumindest ein Absetzbecken durch zumindest ein die Einlaufenergie durch Anpassung der Einlauföffnung kontinuierlich optimierendes Einlaufbauwerk erfolgt, mit anschließender Trennung der unterschiedlich schweren Phasen in je einen Rücklaufvolumenstrom Q_{R} und einen Ablaufvolumenstrom Q_{C}, dadurch **gekennzeichnet**, dass zumindest ein Teilstrom Q_{I} und bis zum gesamten Zustrom Q_{IN} in oder an dem Einlaufbauwerk durch Veränderung der Lage der Einströmränder der Einlauföffnung zueinander oder durch zumindest temporäre Aufteilung der Einströmfläche in unterschiedlich ausgerichtete Teilflächen aus dem Einlaufbauwerk bei hoher Last weitgehend in Richtung zwei bis vier Uhr und bei niedriger Last zumindest in einem Teilstrom Q_{I} in Richtung fünf bis elf Uhr herausströmt.

Ziffer 5: Absetzbecken nach Ziffer 4, dadurch **gekennzeichnet** , dass für zumindest eine der Einlauföffnungen zum Becken der zugehörige Teilvolumenstrom in seiner Größe kontrolliert werden kann, zum Beispiel über Veränderung der durchströmten Fläche mittels Verschlussorganen oder durch sonstige Einrichtungen oder Maßnahmen, die die Größe der durchströmten Fläche oder den Fließwiderstand an der durchströmten Fläche beeinflussen.

Ziffer 6: Absetzbecken nach einer der vorhergehenden Ziffern, dadurch **gekennzeichnet** , dass eine durchströmbare Fläche Aᵢ der Einlauföffnung durch zumindest eine in ihrer Position veränderliche obere, die Einlauföffnung somit nach oben begrenzende, Vorrichtung definiert wird und sowohl zumindest die erste Einlauföffnung mit Fläche Aᵢ als auch zumindest eine zweite Einlauföffnung mit Fläche Aᵢᵢ durch zumindest eine weitere in ihrer Position veränderliche untere begrenzende Vorrichtung definiert wird.

Ziffer 7: Absetzbecken nach Ziffer 6, dadurch **gekennzeichnet**, dass sich im oder am Einlaufbauwerk eine Vorrichtung befindet, die durch zumindest eine teleskopier- oder faltbare oder auf anderem Wege in der Höhenlage anpassbare, vorteilhaft für rechteckige Becken gerade und vorteilhaft für runde Becken runde oder aber beliebig anders geformte Wand W die obere Berandung einer ersten Einlauföffnung mit Fläche Aᵢ bestimmt wird und durch eine darunter angeordnete, mit den Teilen P₁ und P₂ zumindest zweiteilige, gerade oder runde oder ungleichförmig gestaltete Vorrichtung 5b als Platte P sowohl die untere Berandung der einen Einlauföffnung mit Fläche Aᵢ als auch zugleich die obere und die untere Berandung einer zweiten Einlauföffnung mit Fläche Aᵢᵢ bestimmt wird und sich durch unterschiedliche Einstellung der Positionen der Wand W und der Teile P₁ und P₂ der Platte die Größen der durchströmten Einlauföffnungen mit Fläche Aᵢ und mit Fläche Aᵢᵢ und somit auch die Größen der Teilvolumenströme Qᵢ und Qᵢᵢ verändern lassen.

Ziffer 8: Absetzbecken nach Ziffer 6, dadurch **gekennzeichnet**, dass sich im oder am Einlaufbauwerk eine Vorrichtung befindet, die durch zumindest eine teleskopier- oder faltbare oder auf anderem Wege in der Höhenlage anpassbare gerade oder runde oder ungleichförmig gestaltete Wand W die obere Berandung einer ersten Einlauföffnung mit Fläche Aᵢ bestimmt wird und durch zumindest eine unter der ersten Wand angeordnete, gerade oder runde oder ungleichförmig gestaltete, in der Höhenlage anpassbare, ein- oder mehrteilige Vorrichtung sowohl die untere Berandung einer ersten Einlauföffnung Aᵢ als auch zugleich die untere Berandung einer zweiten Einlauföffnung mit Fläche Aᵢᵢ bestimmt wird sowie durch die Unterkante einer zweiten, ebenfalls in ihrer Lage veränderbaren oder auch ortsfesten vertikalen Wand, das oberhalb des tiefsten Punktes des Verfahrwegs der Platte liegt, die obere Berandung der zweiten Einlauföffnung mit Fläche Aᵢᵢ definiert und sich somit auch die Größen der Teilvolumenströme Qᵢ und Qᵢᵢ verändern lassen.

Ziffer 9: Absetzbecken nach einer der Ziffern 7 oder 8, dadurch **gekennzeichnet** , dass die Positionen der benannten Wände und/oder Platten so eingestellt werden können, dass zumindest eine der durchströmten Flächen temporär zumindest weitestgehend verschlossen werden kann, sodass für einen der beiden Teilströme auch bei Q_{IN} > 0 temporär Qᵢ ≈ 0 oder Qᵢᵢ « 0 eingestellt werden kann.

Ziffer 10: Absetzbecken nach einer der Ziffern 4 bis 9, dadurch **gekennzeichnet**, dass der ausströmende Volumenstrom in der untersten Position durch Vertikalumlenkung infolge eines starren Strömungsleitschilds 7 oder eines im Winkel verstellbaren Strömungsleitschildes als Q_{V} vertikal ausströmt, in oberer Position als Q_{H} ausschließlich horizontal geführt wird.

Ziffer 11: Absetzbecken nach einer der Ziffern 4 bis 10, dadurch **gekennzeichnet**, dass das Maß der aktuellen Aufteilung der Teilvolumenströme durch Steuerung oder Regelung auf die momentane Belastung des Absetzbeckens eingestellt wird.

Ziffer 12: Absetzbecken nach einer der Ziffern 4 bis 11, dadurch **gekennzeichnet** , dass Ablenkvorrichtungen angebracht sind, die durch Veränderung ihres Winkels den Winkel der Ausströmung beeinflussen.

Ziffer 13: Absetzbecken nach einer der Ziffern 4 bis 12, dadurch **gekennzeichnet**, dass die Vorrichtungen zur Einstellung der Einlauföffnungen sich einerseits zumindest teilweise gegenseitig in ihrer Position beeinflussen und andererseits in ihren Endlagen zumindest teilweise durch Anschlagpunkte fixiert werden können.

Ziffer 14: Absetzbecken nach einer der Ziffern 4 bis 13, dadurch **gekennzeichnet**, dass zumindest eine der Teilöffnungen mit strömungsbegünstigenden Ein- oder Anbauten, zum Beispiel um gelochte Vorrichtungen oder um Lamellen, versehen wird.

Ziffern 15: Absetzbecken nach einer der vorhergehenden Ziffern 4 bis 14, dadurch **gekennzeichnet** , dass verschiedene der beschriebenen Vorrichtungen in runden oder rechteckigen Becken mit schräger oder gerader Sohle in beliebiger Zusammenstellung von z. B. Umlenkung 5a oder 5b mit im Winkel verstellbarem Strömungsleitschild 6 oder starrem Strömungsleitschild 7 kombiniert werden.

## Patentansprüche

1. Verfahren,
bei dem der Austritt eines mehrphasigen Fluids mit Gesamtvolumenstrom Q_{IN} aus zumindest einem Einlaufbauwerk in zumindest ein Absetzbecken erfolgt, wobei die Einlaufenergie durch Anpassung einer Einlauföffnung des Einlaufbauwerks kontinuierlich optimiert wird, mit anschließender Trennung der unterschiedlich schweren Phasen in zumindest je einen Rücklaufvolumenstrom Q_{R} und einen Ablaufvolumenstrom Qc in dem zumindest einen Absetzbecken, **dadurch gekennzeichnet,**
**dass** bis zum Gesamtvolumenstrom Q_{IN} in oder an dem Einlaufbauwerk durch Veränderung der Lage der Einströmränder der Einlauföffnung zueinander oder durch zumindest temporäre Aufteilung der Einströmfläche in unterschiedlich ausgerichtete Teilflächen aus dem Einlaufbauwerk bei hoher Last der Gesamtvolumenstrom Q_{IN} oder zumindest ein größerer Teil des Gesamtvolumenstroms Q_{IN} als Teilvolumenstrom Q_{II} weitgehend in Richtung zwei bis vier Uhr und bei niedriger Last zumindest ein Teilvolumenstrom Q_{I} in Richtung fünf bis elf Uhr herausströmt,
wobei die Einströmränder mindestens teilweise durch eine Unterkante einer in einer Höhenlage und/oder in einer vertikalen Ausdehnung veränderbaren Wand (4) und durch eine in einer Höhenlage verstellbaren Außenkante einer Vorrichtung (5a, 5b, 5c) gebildet werden, und wobei die Lage der Einströmränder zueinander oder die Aufteilung der Einströmfläche in unterschiedlich ausgerichtete Teilflächen verändert wird, indem eine Höhenlage der Vorrichtung (5a, 5b, 5c) verändert wird, die Unterkante der Wand (4) über und unter die Außenkante der Vorrichtung (5a, 5b, 5c) geführt und dabei ein vertikaler Abstand zwischen der Unterkante der Wand (4) und der Außenkante der Vorrichtung (5a, 5b, 5c) verändert wird.

2. Verfahren nach Anspruch 1, **dadurch gekennzeichnet,**
**dass** die Richtung der Abströmung bzw. das Maß der Aufteilung zwischen Q_{I} = Q_{IN} und Q_{II} = 0 sowie Q_{I} = 0 und Q_{II} = Q_{IN} teilweise oder insgesamt und in Stufen oder stufenlos variabel einstellbar oder selbsteinstellend ist.

3. Verfahren nach Anspruch 1 oder 2, **dadurch gekennzeichnet,**
**dass** die momentane Belastung des Absetzbeckens direkt oder indirekt über die Gesamtbelastung erfasst wird, um durch Steuerung oder Regelung das Maß der aktuellen Aufteilung in die Teilvolumenströme Q_{I} und Q_{II} und/oder die Ausrichtung der Zuströmung einstellen zu können.

4. Einlaufbauwerk (2) zum Zuführen eines mehrphasigen Fluids mit Gesamtvolumenstrom Q_{IN} in ein Absetzbecken, aufweisend:
eine Einlauföffnung, durch die das mehrphasige Fluid aus dem Einlaufbauwerk (2) ausströmen kann und die in ihrer Höhenlage einstellbar ist,
wobei die Einlauföffnung durch zwei höhenvariable Berandungen definiert ist, die so ausgestattet sind, dass zumindest eine Berandung über und auch unter eine Kote der anderen Berandung geführt werden kann, und
wobei bis zum Gesamtvolumenstrom Q_{IN} durch Veränderung der Lage der Einströmränder der Einlauföffnung zueinander oder durch zumindest temporäre Aufteilung der Einströmfläche in unterschiedlich ausgerichtete Teilflächen bei hoher Last der Gesamtvolumenstrom Q_{IN} oder zumindest ein größerer Teil des Gesamtvolumenstroms Q_{IN} als Teilvolumenstrom Q_{II} weitgehend in Richtung zwei bis vier Uhr und bei niedriger Last zumindest ein Teilvolumenstrom Q_{I} in Richtung fünf bis elf Uhr einstellbar sind.

5. Einlaufbauwerk nach Anspruch 4, wobei
eine der Berandungen durch eine Unterkante einer in ihrer Höhenlage und/oder in einer vertikalen Ausdehnung veränderbaren Wand (4) und die andere Berandung durch eine Außenkante einer in ihrer Höhenlage verstellbaren Vorrichtung (5a, 5b, 5c) gebildet werden.

6. Einlaufbauwerk nach Anspruch 5, **dadurch gekennzeichnet,**
**dass** für zumindest eine der Einlauföffnungen zum Becken der zugehörige Teilvolumenstrom in seiner Größe kontrollierbar ist, zum Beispiel über Veränderung der durchströmten Fläche mittels Verschlussorganen.

7. Einlaufbauwerk nach einem der Ansprüche 5 und 6, **dadurch gekennzeichnet,**
**dass** die in der Höhenausdehnung veränderbare Wand (4) teleskopierbar, faltbar oder auf anderem Wege in der Höhenausdehnung veränderbar ist, vorteilhaft für rechteckige Becken gerade und vorteilhaft für runde Becken rund oder aber beliebig anders geformt ist, und eine obere Berandung einer ersten Einlauföffnung mit Fläche Aᵢ bestimmt, und
**dass** die in der Höhenlage verstellbare Vorrichtung (5a, 5b, 5c) als eine unter der Wand (4) angeordnete Platte (P) mit Teilen P₁ und P₂ zumindest zweiteilig, gerade oder rund oder ungleichförmig gestaltet ist, und sowohl eine untere Berandung einer ersten Einlauföffnung mit Fläche Aᵢ als auch zugleich eine obere und eine untere Berandung einer zweiten Einlauföffnung mit Fläche Aᵢᵢ bestimmt, und
wobei durch unterschiedliche Einstellung der Höhenausdehnung der Wand (W) und einer Höhenlage der Teile P₁ und P₂ der Platte (P) die erste Einlauföffnung mit Fläche Aᵢ und die zweite Einlauföffnung mit Fläche Aᵢᵢ und somit Größen der Teilvolumenströme Q_{I} und Q_{II} veränderbar sind.

8. Einlaufbauwerk nach einem der Ansprüche 5 und 6, **dadurch gekennzeichnet,**
**dass** die in der Höhenausdehnung veränderbare Wand (4) teleskopierbar, faltbar, oder auf anderem Wege in der Höhenausdehnung veränderbar ist, gerade oder rund oder ungleichförmig gestaltet ist, und eine obere Berandung einer ersten Einlauföffnung mit Fläche Aᵢ bestimmt,
und **dass** die in der Höhenlage verstellbare Vorrichtung (5a, 5c) unter der Wand (4) angeordnet, gerade oder rund oder ungleichförmig gestaltet, in der Höhenlage anpassbar, und zweiteilig ist und einen ersten Teil (5c) mit Strömungsumlenkung nach oben für den Teilvolumenstrom Q_{II} umfasst, wobei der erste Teil (5c) sowohl eine untere Berandung der ersten Einlauföffnung Aᵢ als auch eine untere Berandung einer zweiten Einlauföffnung mit Flache Aᵢᵢ bestimmt, und eine Unterkante eines zweiten, in einer Höhenlage veränderbaren oder auch ortsfesten Teils (5a) der Vorrichtung (5a, 5c), der oberhalb eines tiefsten Punktes eines Verfahrwegs der Strömungsumlenkung (5c) angeordnet ist, eine obere Berandung der zweiten Einlauföffnung mit Fläche Aᵢᵢ definiert, und somit Größen der Teilvolumenströme Q_{I} und Q_{II} veränderbar sind.

9. Einlaufbauwerk nach einem der Ansprüche 7 oder 8, **dadurch gekennzeichnet,**
**dass** die Höhenausdehnung der veränderbaren Wand (4) und die Höhenlage der in ihrer Höhenlage verstellbaren Vorrichtung (5a, 5b, 5c) so einstellbar sind, dass zumindest eine der durchströmten Flächen temporär zumindest weitestgehend verschließbar ist, sodass für einen der beiden Teilvolumenströme Q_{I} und Q_{II} auch bei Q_{IN} > 0 temporär Q_{I} ≈ 0 oder Q_{II} ≈ 0 einstellbar ist.

10. Einlaufbauwerk nach einem der Ansprüche 5 bis 9, **dadurch gekennzeichnet,**
**dass** ein Maß einer Aufteilung der Teilvolumenströme Q_{I} und Q_{II} durch Steuerung oder Regelung auf eine momentane Belastung des Absetzbeckens einstellbar ist.

11. Einlaufbauwerk nach einem der Ansprüche 4 bis 10, **dadurch gekennzeichnet,**
**dass** eine Unterkante der in der Höhenausdehnung veränderbaren Wand (4) und die Höhenlage der in ihrer Höhenlage verstellbaren Vorrichtung (5a, 5b, 5c) zumindest teilweise gegenseitig in ihrer Position beeinflussbar sind und in ihren Endlagen zumindest teilweise durch Anschlagpunkte fixierbar sind.

12. Absetzbecken mit einem Einlaufbauwerk (2) nach einem der vorhergehenden Ansprüche 4 bis 11, **dadurch gekennzeichnet,**
**dass** das Absetzbecken rund oder rechteckig mit schräger oder gerader Sohle ausgebildet ist.

13. Einlaufbauwerk nach Anspruch 4, **dadurch gekennzeichnet,**
**dass** für ein rundes Einlaufbauwerk die eine Berandung durch eine Unterkante eines vertikal teleskopierbaren Zylinders und die andere Berandung durch eine vertikal verschiebliche Ringplatte definiert ist, wobei ein Innendurchmesser des Zylinders größer ist als ein Außendurchmesser der Ringplatte.
